Europäisches Patentamt

European Patent Office

Office européen des brevets

(19)

(11) **EP 1 157 258 B1**

(12) **FASCICULE DE BREVET EUROPEEN**

(45) Date de publication et mention
de la délivrance du brevet:
**13.08.2003 Bulletin 2003/33**

(21) Numéro de dépôt: **00907735.5**

(22) Date de dépôt: **25.02.2000**

(51) Int Cl.⁷: $G01H\ 5/00$, $G01F\ 1/66$

(86) Numéro de dépôt international:
**PCT/FR00/00484**

(87) Numéro de publication internationale:
**WO 00/052431 (08.09.2000 Gazette 2000/36)**

(54) **METHODE ET DISPOSITIF DE MESURE DU TEMPS DE PROPAGATION D'UN SIGNAL, EN PARTICULIER D'UN SIGNAL ULTRASONORE**

VERFAHREN UND VORRICHTUNG ZUR MESSUNG DER LAUFZEIT EINES SIGNALS, INSBESONDERE EINES ULTRASCHALLSIGNALS

METHOD AND DEVICE FOR MEASURING PROPAGATION TIME OF A SIGNAL, IN PARTICULAR A ULTRASONIC SIGNAL

(84) Etats contractants désignés:
**AT BE CH CY DE DK ES FI FR GB GR IE IT LI LU MC NL PT SE**

(30) Priorité: **03.03.1999 FR 9902672**

(43) Date de publication de la demande:
**28.11.2001 Bulletin 2001/48**

(73) Titulaire: **SCHLUMBERGER INDUSTRIES S.A.**
**92120 Montrouge (FR)**

(72) Inventeur: **LELEU, Christophe**
**F-71000 Mâcon (FR)**

(74) Mandataire: **Feray, Valérie et al**
**Feray Lenne Conseil**
**44/52, Rue de la Justice**
**75020 Paris (FR)**

(56) Documents cités:
**DE-A- 4 017 022          FR-A- 2 750 495**
**US-A- 5 123 286          US-A- 5 777 238**

EP 1 157 258 B1

Printed by Jouve, 75001 PARIS (FR)

## Description

L'invention est relative à une méthode et à un dispositif de mesure du temps de propagation de signaux, notamment ultrasonores se propageant entre deux transducteurs.

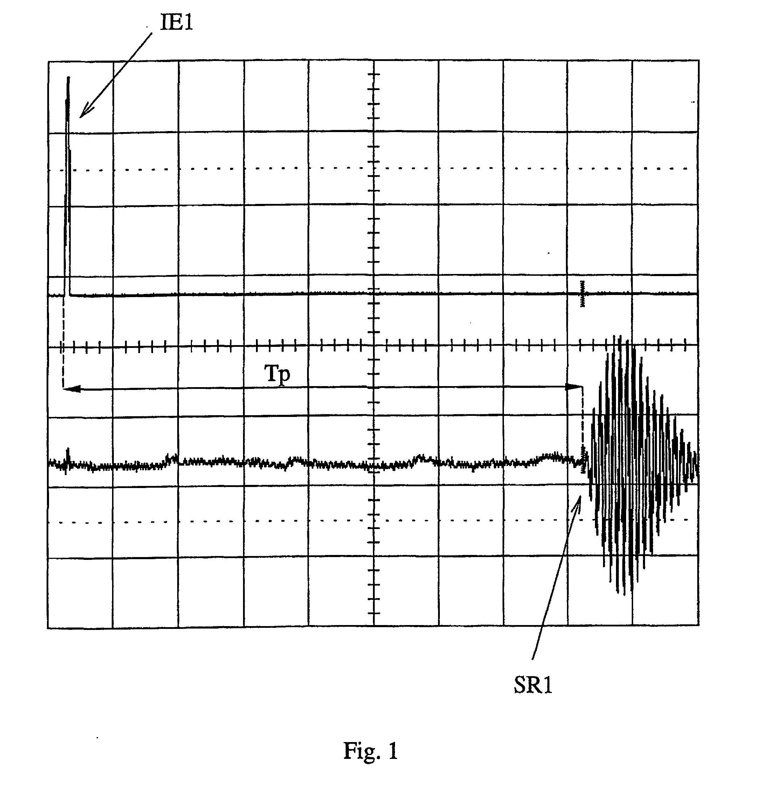

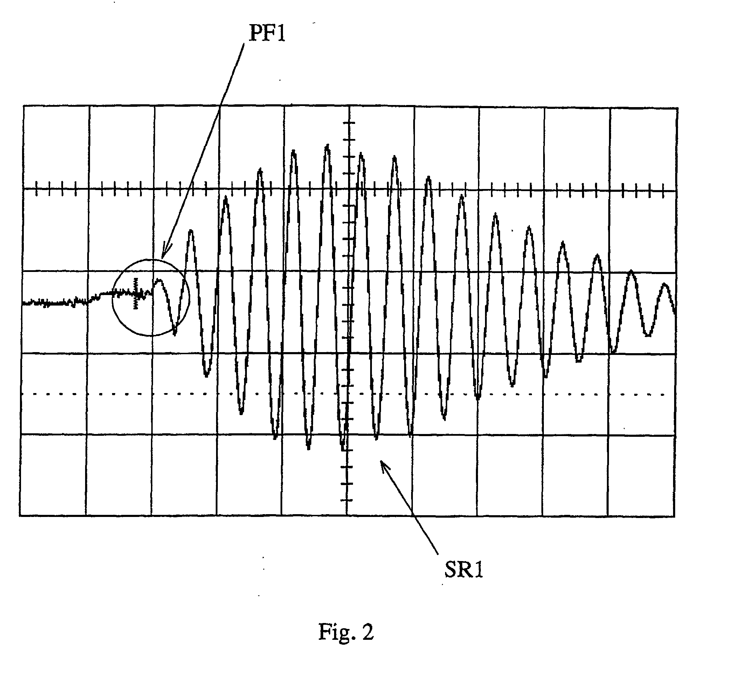

Afin de mesurer le temps de propagation $T_p$ d'un signal, par exemple un signal ultrasonore, entre deux transducteurs, une méthode connue consiste à exciter le transducteur émetteur au moyen d'une impulsion d'excitation IE1. Une telle impulsion d'excitation est de forme sensiblement rectangulaire et le spectre en fréquence comprend la fréquence d'excitation du transducteur. Cette impulsion va donner lieu à l'émission, par le transducteur émetteur, d'une onde ultrasonore dans le milieu séparant les deux transducteurs. Cette onde ultrasonore va se propager en direction du transducteur récepteur. La figure 1 représente le signal d'excitation IE1 du transducteur émetteur et le signal en sortie du transducteur récepteur SR1. La méthode consiste à détecter la première oscillation de ladite onde dès son arrivée sur le transducteur récepteur. Le temps de propagation $T_p$ est alors le temps entre l'instant où le transducteur émetteur est soumis à l'impulsion d'excitation et l'instant de détection de la première oscillation de l'onde ultrasonore arrivant au niveau du transducteur récepteur. Cette méthode est particulièrement difficile à mettre en oeuvre et souffre d'imprécision donnant lieu à une mesure du temps de propagation erronée. En effet, l'onde ultrasonore donne lieu au niveau du transducteur récepteur à un signal de réponse d'amplitude très faible. A titre d'exemple, dans le cadre de la débitmétrie ultrasonore utilisée dans les réseaux de chauffage, à un transducteur de fréquence de résonance proche de 1 MHz correspond un signal de réponse d'une amplitude comprise entre 3 et 10 mV environ. La figure 2 présente l'allure du signal de réponse du transducteur récepteur SR1 lorsque le transducteur émetteur est excité par une seule impulsion. La méthode consiste à détecter la première oscillation de l'onde ultrasonore PF1 en détectant le dépassement d'un seuil de tension. Cette méthode nécessite d'une part de détecter de très faibles niveaux de tension, et d'autre part de maîtriser précisément le seuil de déclenchement du dispositif de détection de l'arrivée d'une oscillation afin de ne pas introduire de retard dans la mesure du temps de propagation. Cette méthode peut être précise si l'on utilise un composant électronique à déclenchement de seuil performant, mais coûteux. Elle est par contre imprécise avec un composant électronique à déclenchement de seuil de type courant.

Par ailleurs, on connaît par le brevet US 5,123,286 une méthode pour déterminer le temps de propagation d'une onde ultrasonore entre deux transducteurs. Le transducteur émetteur est excité par une impulsion carrée qui donne lieu à l'apparition d'un signal de réponse typique d'un oscillateur amorti dont l'amplitude crête augmente pour un certain nombre de périodes avant de décroître. La méthode se propose de déterminer le temps de propagation entre l'instant d'excitation du transducteur émetteur et l'instant de réception du signal ultrasonore par le transducteur récepteur. Elle consiste à calculer une enveloppe du signal de réponse par la détermination d'une part de l'amplitude d'un groupe de périodes et d'autre part des instants de passage à zéro desdites périodes. Le point d'intersection de cette enveloppe avec la ligne de base du signal de réponse est ensuite calculé pour déterminer l'instant d'apparition du signal de réponse au niveau du transducteur. Enfin, la détermination du temps de propagation s'effectue en calculant la différence entre l'instant d'excitation et ledit instant d'apparition du signal.

On connaît également par le document DE 4017022, un dispositif électronique pour améliorer la précision des mesures de temps de propagation d'onde ultrasonore entre deux transducteurs. Ce dispositif propose de déterminer de manière précise l'instant correspondant à la réception de l'onde ultrasonore. Le signal de réception est envoyé sur deux comparateurs dont les tensions de seuil sont différentes. Un signal dit de cycle et un signal dit de période sont générés. Ces signaux servent de déclenchement pour un compteur de longueur de cycle et un compteur de longueur de période. La sortie du compteur de longueur de cycle est reliée à une mémoire destinée à mémoriser un signal binaire correspondant au signal de réception. A la fin de la mesure de la longueur du cycle, le contenu de la mémoire est analysée en prenant en considération la période du signal. Le circuit tient compte de la valeur stockée pour corriger la longueur du cycle, et déterminer le temps de propagation.

Un débitmètre à ultrasons décrit dans le document US 5,777,238 mesure le temps de propagation du signal ultrasonore en faisant appel à au moins un signal de fenêtrage de référence adaptatif ou dynamique (comportant une partie fixe et une partie variable) et à un détecteur ou circuit de passage à zéro. Le passage par zéro est déterminé pour chaque période composant le signal reçu et la détermination du temps de propagation est basée sur une moyenne calculée sur les temps correspondants à ces passages par zéro.

Ces méthodes sont complexes à mettre en oeuvre, et nécessitent d'effectuer et de stocker diverses mesures ainsi que de réaliser de nombreux calculs.

La présente invention a ainsi pour objet une méthode simplifiée pour mesurer le temps de propagation $T_p$ d'un signal ultrasonore entre deux transducteurs constitués d'un émetteur et d'un récepteur à distance l'un de l'autre. Le transducteur émetteur est soumis à un signal d'excitation comportant n impulsions successives de période $T_e$ donnant lieu à l'émission d'une onde ultrasonore. L'onde ultrasonore génère en sortie du transducteur récepteur un signal de réception. La méthode comporte les étapes suivantes :

- débuter une mesure de temps de propagation inter-

médiaire $T_{int}$ dès le début de l'excitation du transducteur émetteur,

- détecter le signal de réception en sortie du transducteur récepteur et compter les oscillations dudit signal de réception,
- arrêter la mesure du temps de propagation intermédiaire $T_{int}$ lorsque la i-ième oscillation est détectée, et
- déterminer le temps de propagation $T_p$ du signal en formant la différence $T_{int} - i \times T_e$.

De façon avantageuse, le nombre d'impulsions n composant le signal d'excitation est tel que $n \neq 1$ et la mesure du temps de propagation intermédiaire $T_{int}$ est arrêtée pour la i-ième oscillation du signal de réception telle que $i \neq 1$.

Selon un premier mode de réalisation, la mesure du temps de propagation intermédiaire $T_{int}$ est arrêtée pour la i-ième oscillation du signal de réception correspondant à une amplitude du signal de réception maximum.

Selon un deuxième mode de réalisation, la mesure du temps de propagation intermédiaire $T_{int}$ est arrêtée pour la i-ième oscillation du signal de réception telle que i=n.

Selon un mode de réalisation particulier, le nombre d'impulsions n composant le signal d'excitation est de préférence n = 4 ou 5 et la mesure du temps de propagation intermédiaire $T_{int}$ est arrêtée pour la i-ième oscillation du signal de réception telle que de préférence i = 4 ou 5.

La réponse du transducteur au train de n impulsions correspond à la réponse transitoire d'un oscillateur à une excitation périodique. L'amplitude crête d'un tel signal de réception augmente très rapidement pendant les premières périodes du signal puis se stabilise à une amplitude constante. Un premier avantage est que l'amplitude de la i-ième oscillation est plus grande dans le cas de la réponse à un train de n impulsions (avec n>1) que dans le cas de la réponse à une seule impulsion d'excitation. Un autre avantage d'effectuer la mesure du temps de propagation sur une i-ième oscillation choisie de façon convenable, permet d'effectuer une mesure de temps de propagation sur un signal d'amplitude beaucoup plus grande que la première oscillation du signal de réception. Ainsi, d'une part le seuil de déclenchement sera petit par rapport à l'amplitude crête du signal de réception ce qui implique que le retard introduit par le temps que met le signal de réception à atteindre le seuil de déclenchement sera bien plus petit pour la i-ième oscillation que pour la première oscillation, et d'autre part cette méthode permet d'utiliser un comparateur à seuil de déclenchement standard sans qu'il soit nécessaire de contrôler précisément son seuil de déclenchement, tout en améliorant notablement la précision sur la mesure du temps de propagation.

La présente invention a également pour objet un dispositif de mesure du temps de propagation $T_p$ d'un signal ultrasonore comprenant :

- des moyens de formation d'un signal d'excitation,
- un transducteur émetteur 1, 2 relié audit moyen de formation d'un signal d'excitation,
- un transducteur récepteur transformant le signal ultrasonore en un signal de réception,
- des moyens de comparaison reliés audit transducteur récepteur, comparant l'amplitude du signal de réception à une tension seuil de déclenchement et générant un signal représentatif des oscillations dudit signal de réception,

ledit dispositif comportant en outre :

- des moyens de comptage d'un temps fixe $T_o$ reliés audits moyens de formation d'un signal d'excitation, destinés à décompter un temps fixe $T_o$ à partir de l'instant d'excitation du transducteur émetteur,
- des moyens de détermination de la i-ième oscillation reliés audits moyens de comparaison, destinés à compter le nombre d'oscillations du signal de réception et à détecter la i-ième oscillation,
- des moyens de mesure d'un temps variable $T_{IEX}$ entre la fin du comptage de $T_o$ et la détection de la i-ième oscillation.

D'autres caractéristiques et avantages apparaîtront au cours de la description qui va suivre, donnée à titre d'exemple non limitatif, faite en référence aux dessins annexés et sur lesquels :

- la figure 1 représente le signal d'excitation du transducteur émetteur et le signal en sortie du transducteur récepteur en fonction du temps pour une méthode de mesure selon l'art antérieur,
- la figure 2 représente l'allure du signal de réponse du transducteur récepteur en fonction du temps lorsque le transducteur émetteur est excité par une seule impulsion pour une méthode de mesure selon l'art antérieur,
- la figure 3 représente le signal d'excitation du transducteur émetteur et le signal en sortie du transducteur récepteur en fonction du temps pour la méthode de mesure selon l'invention,
- la figure 4 représente l'allure du signal de réception du transducteur récepteur en fonction du temps lorsque le transducteur émetteur est excité par un train d'impulsions pour une méthode de mesure selon l'invention,
- la figure 5 représente l'amplitude du signal de réception du transducteur récepteur pour la première et la i-ème oscillation,
- les figures 6.a à 6.d sont des représentations schématiques des différents circuits électroniques permettant de mettre en oeuvre la méthode selon l'invention, et
- la figure 7 représente les chronogrammes des divers signaux en relation avec les circuits électroniques des figures 6.a à 6.d.

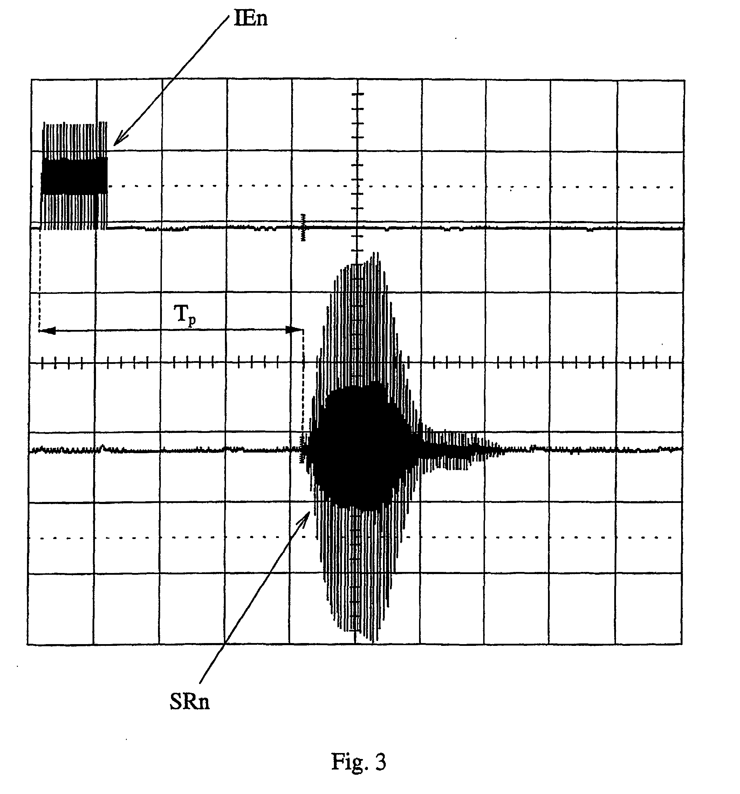

Sur la figure 3 est représenté le signal d'excitation IEn destiné à exciter le transducteur émetteur ainsi que le signal de réception SRn mesuré en sortie du transducteur récepteur. Le temps de propagation $T_p$ que l'on cherche à mesurer est la durée s'écoulant entre l'instant où le signal d'excitation est envoyé sur le transducteur et l'instant où le signal ultrasonore résultant arrive au niveau du transducteur récepteur.

Le signal d'excitation IEn comporte une succession de n impulsions avec un rapport cyclique de par exemple 0,5. De préférence, le nombre d'impulsions n composant le signal d'excitation est tel que n≠1. Le spectre en fréquence de chaque impulsion comporte au moins une fréquence d'excitation $T_e$ proche de la fréquence de résonance du transducteur, par exemple 1 MHz. Ainsi, le transducteur étant comparable à un oscillateur, le fait de le soumettre à une succession d'impulsions, chaque impulsion étant de forme sensiblement rectangulaire va mettre le transducteur dans un régime d'oscillations périodiques entretenues, pendant une durée liée au nombre d'impulsions composant le signal d'excitation. L'onde ultrasonore émise par le transducteur émetteur en direction du transducteur récepteur, dans le milieu séparant les deux transducteurs, résulte du signal d'excitation dont les caractéristiques ont été décrites précédemment. Cette onde donne lieu au niveau du transducteur récepteur au signal de réception SRn. L'onde ultrasonore ainsi que le signal électrique de réception en résultant en sortie du transducteur récepteur ont typiquement la forme d'un paquet d'ondes, c'est à dire d'une oscillation dont l'amplitude croit, puis atteint un maximum pour ensuite diminuer. La diminution de l'amplitude intervenant lorsque le transducteur émetteur n'est plus soumis au signal d'excitation, il a alors le comportement d'un oscillateur amorti.

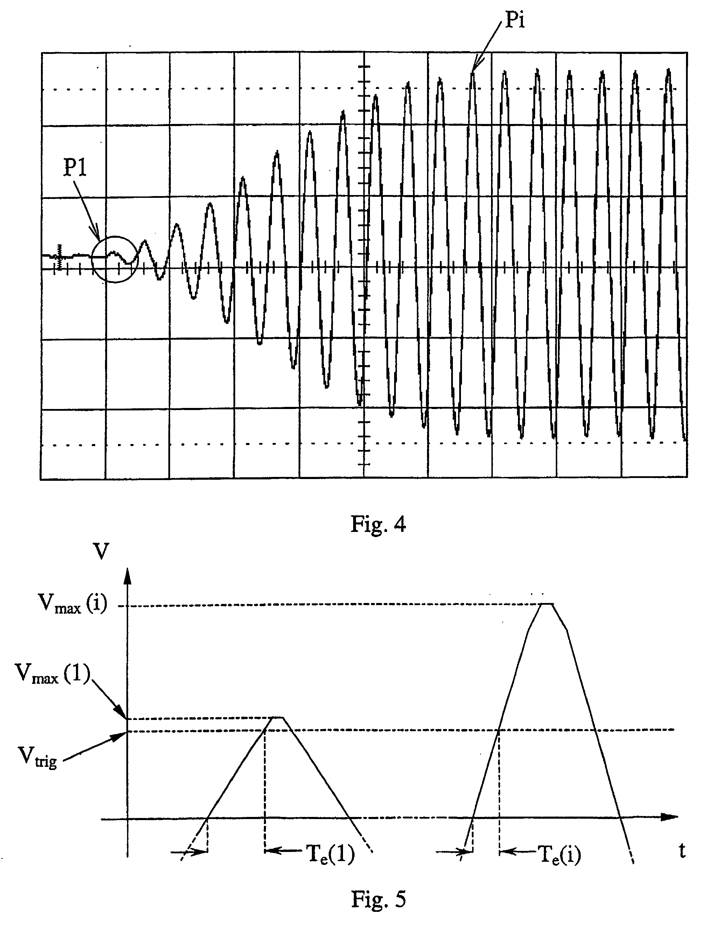

La figure 4 représente une partie du signal de réception mesuré en sortie du transducteur récepteur. La figure 5 représente l'amplitude de ce signal pour la première et la i-ème oscillation.

La première oscillation P1 du signal de réception a une amplitude $V_{max}(1)$ faible mais néanmoins supérieure à la tension seuil de déclenchement $V_{trig}$ permettant sa détection par un circuit électronique approprié. Par contre la i-ème oscillation Pi du signal de réception a une amplitude $V_{max}(i)$ très supérieure à la tension seuil de déclenchement $V_{trig}$. Il est donc clair que l'erreur commise sur une mesure de temps correspondant à l'instant précis où le dépassement de la tension de seuil est détecté est d'autant plus faible que l'amplitude est grande. En conséquence l'erreur commise sur la i-ème oscillation Pi est bien plus faible que celle commise pour la première oscillation P1. Il est donc préférable, afin de minimiser l'erreur commise sur la mesure du temps de propagation, de faire une mesure du temps de propagation intermédiaire sur la i-ème oscillation, puis de corriger cette mesure en retranchant le temps s'étant écoulé entre la détection de la première oscillation et la i-ème oscillation.

De façon avantageuse, la mesure du temps de propagation intermédiaire $T_{int}$ est arrêtée pour la i-ème oscillation du signal de réception telle que i≠1. Selon un mode de réalisation particulièrement avantageux, la mesure du temps de propagation intermédiaire $T_{int}$ est arrêtée pour la i-ième oscillation du signal de réception correspondant à une amplitude du signal de réception maximum.

Selon un autre mode de réalisation, la mesure du temps de propagation intermédiaire $T_{int}$ est arrêtée pour la i-ième oscillation du signal de réception telle que i=n.

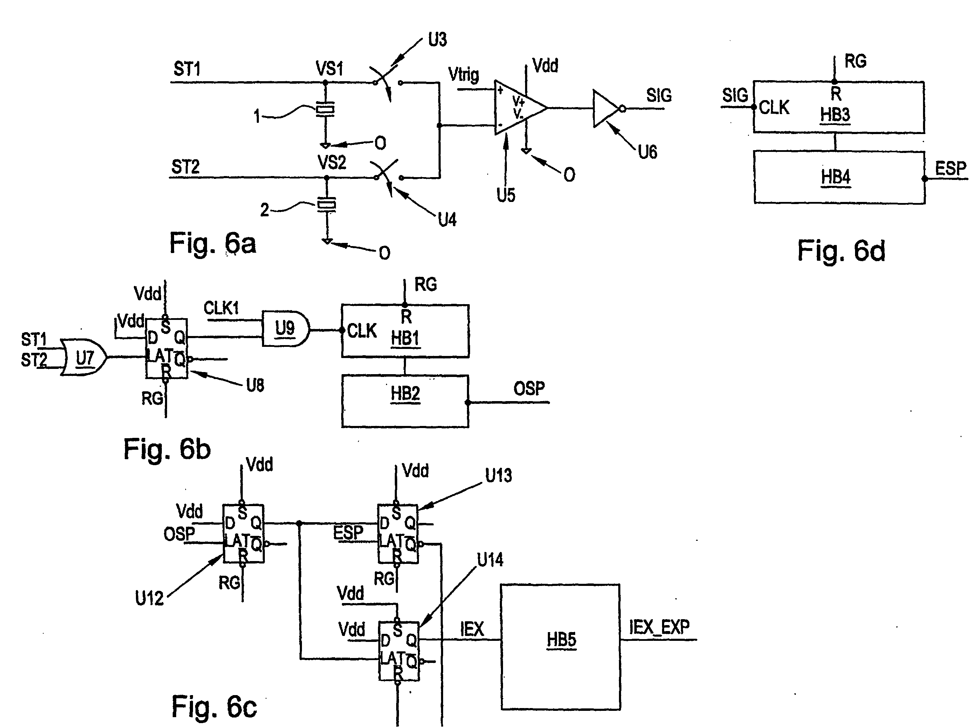

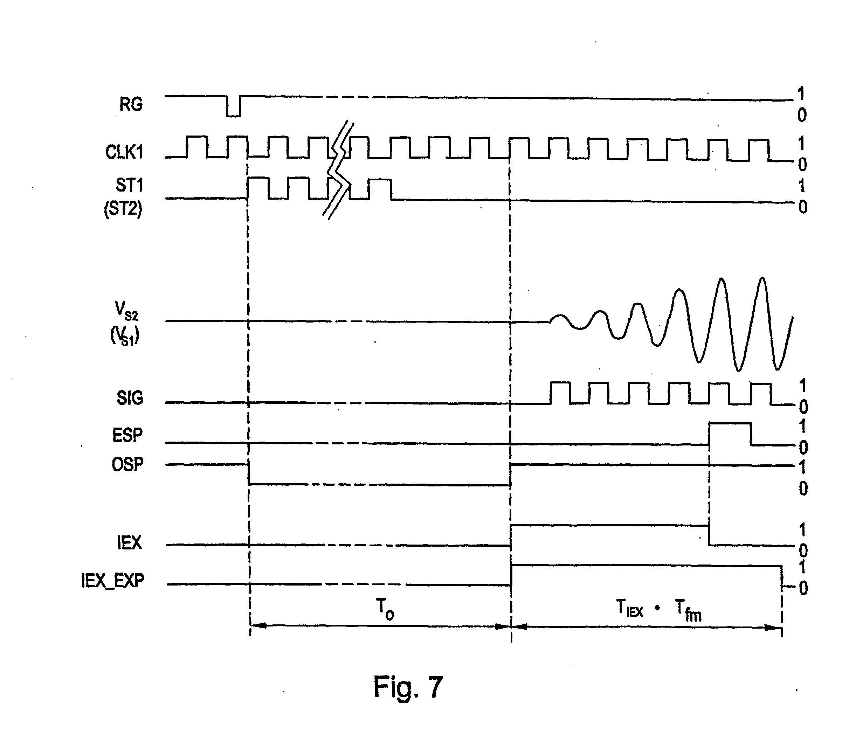

Les figures 6.a à 6.d vont maintenant être décrites en relation avec la figure 7. La figure 7 représente les chronogrammes des signaux intervenant dans les circuits électroniques des figures 6.a à 6.d. Pour l'ensemble des figures 6.a à 6.d, une pile (non représentée) fournit l'énergie nécessaire au fonctionnement des divers composants électroniques par l'intermédiaire d'un câblage approprié et connu de l'homme du métier.

Un tel dispositif trouve notamment une application dans le domaine de la débitmétrie ultrasonore. Les deux transducteurs 1, 2 sont alors disposés dans un écoulement de fluide, le transducteur 1 étant de façon alternée émetteur puis récepteur, l'autre transducteur 2 étant dans un état inverse par rapport au transducteur 1. Les temps de propagation des ondes ultrasonores entre les deux transducteurs 1, 2 dans le sens amont T1 puis dans le sens aval T2 dans le fluide en écoulement permettent de calculer le débit du fluide Q en fonction d'un terme défini K lié à la géométrie du débitmètre :

$$Q \approx \frac{4 \times K \times |T2 - T1|}{(T1 + T2)^2}.$$

La figure 6.a est une vue schématique du circuit qui contrôle l'émission et la réception des ondes ultrasonores par les transducteurs 1, 2. Lors des phases d'émissions, un microcontrôleur (non représenté) commande l'envoi d'un signal d'émission ST1, ST2 (voir fig. 7) sur le transducteur 1, 2 respectivement. Le signal d'émission ST1, ST2 est composé d'un train formé de n impulsions de fréquence fe, par exemple 1 MHz. Le train d'impulsions est synchrone avec le signal d'horloge CLK1.

Sur la figure 6.a, les transducteurs 1, 2 sont du type comportant une lame en matériau piézo-électrique avec deux surfaces métallisées, l'une étant reliée à la masse 0 et l'autre aux interrupteurs U3, U4 respectivement. Lorsque le transducteur 1 est soumis à un signal d'excitation ST1 et émet un signal ultrasonore en direction du transducteur 2, l'interrupteur U3 est ouvert, alors que l'interrupteur U4 relié au transducteur 2 en mode de réception est fermé.

La configuration des interrupteurs est inversée lorsque le transducteur 2 est soumis au signal d'excitation ST2 et que le transducteur 1 est en mode de réception. Les interrupteurs U3, U4 sont commandés par le microcontrôleur (non représenté) d'une manière classique. La tension en sortie VS1, VS2 du transducteur 1, 2 respectivement est envoyée sur l'entrée inverseuse du comparateur U5. Le comparateur U5 est alimenté par la tension VDD par son entrée V+. L'entrée V- du comparateur U5 est reliée à la masse 0. L'entrée non-inverseuse est reliée à une tension de référence dite de déclenchement Vtrig. La sortie du comparateur est reliée à un inverseur U6. Ainsi le signal de réception SIG est disponible en sortie du bloc comparateur U5, U6, lequel est réglé pour un seuil de détection Vtrig. Le dépassement du seuil de tension Vtrig donne lieu à un état bas "0" en sortie du comparateur U5, le passage sous le seuil de tension à un état haut "1". Le signal SIG (voir fig.7) fournit par le circuit de la fig. 6.a est donc représentatif du signal de réception fournit par le transducteur émetteur, chaque créneau du signal SIG correspondant à une arche positive d'une oscillation du signal de réception.

Les figures 6.b, 6.c et 6.d représentent schématiquement les circuits permettant de mesurer le temps de propagation. Le temps de propagation est déterminé en additionnant deux contributions temporelles. Tout d'abord un premier circuit représenté sur les figures 6.b et 6.d permet de décompter un temps fixe To, puis un deuxième circuit représenté sur la figure 6.c permet de mesurer le temps restant entre To et l'instant correspondant à la détection du signal correspondant à la i-ième oscillation. Pour déterminer ce temps restant, lequel est variable, il faut pouvoir mesurer une durée faible ce qui ne peut être effectué par des moyens classiques tels que par exemple une horloge et un compteur haute fréquence. L'utilisation d'un circuit expanseur de temps permet de s'affranchir de ce problème. Le principe de fonctionnement et la mise en oeuvre du circuit expanseur de temps ont déjà été décrits dans le brevet FR 2 750 495. Le circuit expanseur de temps HB5 multiplie la durée d'un créneau par un facteur de multiplication temporel propre au circuit expanseur de temps. L'intervalle de temps dit expansé en sortie du circuit HB5 peut être déterminé de manière classique ce qui permet d'en déduire la durée du créneau en divisant la durée de l'intervalle de temps expansé par le facteur multiplicatif.

Sur la figure 6.b, la porte logique U7 de type "OU" reçoit sur l'une de ces deux entrées le signal ST1 et sur l'autre le signal ST2, sa sortie étant reliée à l'entrée LAT de la bascule de type D U8. Ainsi, lorsqu'un signal ST1 ou ST2 est présent sur l'une des entrées de la porte U7, il est envoyé sur l'entrée LAT. Les deux entrées S et D de la bascule U8 sont au potentiel Vdd c'est à dire dans un état haut et l'entrée $\bar{R}$ est soumise au signal d'initialisation RG. La sortie $\bar{Q}$ de la bascule U8 est en l'air. L'autre sortie Q de la bascule U8 est reliée à une porte logique U9 de type "ET", dont l'autre entrée est soumise au signal d'horloge CLK1. Ainsi, après initialisation de la bascule U8, dès qu'un signal ST1 ou ST2 est présent à l'entrée LAT, la sortie Q de la bascule passe dans l'état haut. Le signal en sortie de la porte logique U9 devient alors le signal d'horloge CLK1. La sortie de la porte logique U9 est reliée à l'entrée CLK du compteur HB1, lequel possède une entrée R soumise au signal d'initialisation RG. Le compteur HB1 va donc compter le nombre de périodes arrivant à son entrée CLK après son initialisation par RG. La sortie du compteur HB1 est reliée à l'entrée d'un décodeur HB2, lequel génère en sortie un signal OSP représentatif de l'intervalle de temps fixe To. Cette durée To correspond à la durée pendant laquelle le signal OSP est dans un état bas.

Ce circuit a donc pour fonction de décompter un temps fixe To, dès le premier changement d'état provoqué par l'arrivée d'un signal ST1 ou ST2 à l'une de ces entrées au niveau de la porte U7.

Une fois la première durée To décomptée, le deuxième circuit représenté à la figure 6.c va déterminer la durée restante entre la fin du comptage correspondant à To et la détection de la i-ième oscillation du signal de réception SIG.

Dans un premier temps, il est nécessaire de détecter la i-ième oscillation. Cette tâche est dévolue au circuit représenté à la figure 6.d. Ce circuit comporte un compteur HB3, lequel possède deux entrées R et CLK, lesquelles sont soumises au signal d'initialisation RG et au signal de réception SIG respectivement. Après initialisation, dès l'arrivée du signal SIG, le compteur va compter le nombre de créneaux que comporte le signal de réception SIG. L'entrée du décodeur HB4 est reliée à la sortie du compteur HB3, de telle sorte que lorsque le compteur atteint le i-ième créneau, le signal de détection ESP en sortie du décodeur HB4 va passer de l'état bas à l'état haut pendant une période du signal de réception SIG (voir fig.7).

Le circuit de la figure 6.c va permettre de déterminer la durée très courte entre la fin du décompte de To et la détection de la i-ième oscillation au moyen du circuit expanseur de temps HB5. Une première bascule U12 de type D, dont les entrées D et S sont au potentiel Vdd et dont l'entrée $\bar{R}$ est soumise au signal d'initialisation RG, reçoit par son entrée LAT le signal OSP, lequel indique la fin de la phase de décomptage de To par un passage à l'état haut (voir fig. 6.b et 7). La sortie $\bar{Q}$ de la bascule U12 est en l'air. La sortie Q passe dans un état haut lorsque le signal OSP passe de l'état bas à l'état haut. La sortie Q de la bascule U12 est reliée à l'entrée D et LAT de la bascule U13 et U14 respectivement. Les entrées S, LAT et $\bar{R}$ de la bascule U13 sont soumises au potentiel Vdd, au signal de détection ESP et au signal d'initialisation RG respectivement. La sortie Q de la bascule U13 est en l'air alors que la sortie $\bar{Q}$ est reliée à l'entrée $\bar{R}$ de la bascule U14. Ainsi, lorsque le signal OSP passe d'un état bas à un état haut dès la fin du décompte de To et que le signal de détection ESP passe dans un état haut lors de la détection de la i-ième os-

cillation, la sortie $\overline{Q}$ passe d'un état haut à un état bas, forçant la sortie $\overline{Q}$ de la bascule U14 à zéro (signal IEX). Les entrées S et D de la bascule U14 sont au potentiel Vdd. La sortie Q de la bascule U14 est en l'air. La sortie Q de la bascule U14 fournit le signal IEX, lequel est à l'état haut lorsque le signal OSP passe à l'état haut et tant que le signal de détection ESP n'est pas passé de l'état bas à l'état haut. Le signal IEX est donc un créneau à l'état haut commençant à la fin du décomptage de To et finissant lorsque la i-ième oscillation est détectée. L'expanseur de temps HB5 traite le signal IEX de telle façon que la durée $T_{IEX}$, pendant laquelle le créneau correspondant au signal IEX est dans un état haut, est multipliée par un facteur $T_{fm}$. Le signal résultant en sortie de l'expanseur HB5 est le signal IEX_EXP.

Les deux signaux OSP et IEX_EXP vont être traités par un microcontrôleur (non représenté), lequel va déterminer le temps de propagation intermédiaire, par exemple dans le cas d'une onde ultrasonore se propageant entre le transducteur 1 et 2 :

$$T_{int} = To + \frac{T_{IEX}}{T_{fm}}.$$

Ensuite le microcontrôleur va déterminer le temps de propagation $T_p$ en fonction du nombre i choisi et de la période du signal ST1 d'excitation du transducteur :

$$T_p = T_{int} - i \times Te.$$

L'ensemble des circuits électroniques décrits peut être intégré au niveau d'un composant spécifique (ASIC). Le nombre n d'impulsions composant le signal d'excitation ainsi que le nombre i déterminant l'oscillation du signal de réception sur laquelle la mesure du temps de propagation est effectuée peuvent être programmés au niveau de l'ASIC ou du logiciel assurant la gestion de l'ASIC et l'exploitation des données qu'il fournit.

De façon avantageuse, la mesure du temps de propagation intermédiaire $T_{int}$ est arrêtée pour la i-ième oscillation du signal de réception correspondant à une amplitude du signal de réception maximum.

A titre d'exemple, dans le domaine de la débitmétrie ultrasonore, les compteurs comportent des transducteurs ultrasonores de fréquence de résonance proche de 1MHz, l'ASIC et le logiciel sont alors programmés de telle sorte que le nombre d'impulsions n composant le signal d'excitation est de préférence n=4 ou 5 et la mesure du temps de propagation intermédiaire $T_{int}$ est arrêtée pour la i-ième oscillation du signal de réception telle que de préférence i = 4 ou 5. Par ailleurs la méthode ainsi que le dispositif selon l'invention appliqué à la débitmétrie ultrasonore, permettent d'améliorer de façon importante la précision des mesures et permettent d'obtenir une erreur inférieure à 0,05% sur la mesure du temps de propagation, tout en utilisant un composant à déclenchement de seuil courant, peu coûteux et consommant peu d'énergie.

Bien que la méthode ait été décrite en rapport avec des ondes ultrasonores, il est bien évident qu'elle ne se limite pas à ce type d'onde et que l'homme du métier peut transposer la méthode à tout autre type d'onde par exemple électrique ou électromagnétique. Il en va de même pour le dispositif de mesure du temps de propagation.

**Revendications**

1. Méthode pour mesurer le temps de propagation ($T_p$) d'un signal ultrasonore entre deux transducteurs constitués d'un émetteur et d'un récepteur à distance l'un de l'autre, le transducteur émetteur étant soumis à un signal d'excitation (IEn) comportant n impulsions successives de période $T_e$, n étant différent de 1, donnant lieu a l'émission d'une onde ultrasonore en direction du transducteur récepteur, ladite onde ultrasonore générant en sortie du transducteur récepteur un signal de réception, ladite méthode étant **caractérisée en ce qu'**elle comporte les étapes suivantes :

   - débuter une mesure de temps de propagation intermédiaire ($T_{int}$) dès le début de l'excitation du transducteur émetteur,
   - détecter le signal de réception (SRn) en sortie du transducteur récepteur et compter les oscillations dudit signal de réception,
   - arrêter la mesure du temps de propagation intermédiaire ($T_{int}$) lorsque la i-ième oscillation (Pi) est détectée, i étant différent de 1, et
   - déterminer le temps de propagation ($T_p$) du signal en formant la différence $T_{int} - i \times T_e$.

2. Méthode selon la revendication 1, **caractérisée en ce que** la mesure du temps de propagation intermédiaire ($T_{int}$) est arrêtée pour la i-ième oscillation (Pi) du signal de réception (SRn) correspondant à une amplitude du signal de réception maximum.

3. Méthode selon l'une des revendications précédentes, **caractérisée en ce que** la mesure du temps de propagation intermédiaire ($T_{int}$) est arrêtée pour la i-ième oscillation (Pi) du signal de réception (SRn) telle que i≠1.

4. Méthode selon l'une des revendications précédentes, **caractérisée en ce que** la mesure du temps de propagation intermédiaire ($T_{int}$) est arrêtée pour la i-ième oscillation (Pi) du signal de réception (SRn) telle que i=n.

**5.** Méthode selon l'une des revendications précédentes, **caractérisée en ce que** la mesure du temps de propagation intermédiaire ($T_{int}$) est arrêtée pour la i-ième oscillation (Pi) du signal de réception (SRn) telle que i = 4.

**6.** Méthode selon l'une des revendications 1 à 4, **caractérisée en ce que** la mesure du temps de propagation intermédiaire ($T_{int}$) est arrêtée pour la i-ième oscillation (Pi) du signal de réception (SRn) telle que telle que i = 5.

**7.** Méthode selon l'une des revendications précédentes, **caractérisée en ce que** le nombre d'impulsions n composant le signal d'excitation (IEn) est tel que n≠1.

**8.** Méthode selon l'une des revendications précédentes, **caractérisée en ce que** le nombre d'impulsions n composant le signal d'excitation (IEn) est tel que n=4.

**9.** Méthode selon l'une des revendications 1 à 7, **caractérisée en ce que** le nombre d'impulsions n composant le signal d'excitation (IEn) est tel que 5.

**10.** Dispositif de mesure du temps de propagation ($T_p$) d'un signal ultrasonore comprenant :

- des moyens de formation d'un signal d'excitation,
- un transducteur émetteur (1 ; 2) relié audits moyens de formation d'un signal d'excitation,
- un transducteur récepteur (2 ; 1) destiné à transformer le signal ultrasonore en un signal de réception,
- des moyens de comparaison reliés audit transducteur récepteur, destinés à comparer l'amplitude du signal de réception à une tension seuil de déclenchement et à générer un signal représentatif des oscillations dudit signal de réception,

ledit dispositif étant **caractérisé en ce qu'**il comporte en outre :

- des moyens de décomptage d'un temps fixe (HB1, HB2) reliés audits moyens de formation d'un signal d'excitation, destinés à décompter un temps fixe ($T_o$) à partir de l'instant d'excitation du transducteur émetteur,
- des moyens de détermination de la i-ième oscillation (HB3, HB4) reliés audits moyens de comparaison destinés à compter le nombre d'oscillations du signal de réception et à détecter la i-ième oscillation, i étant different de 1,
- des moyens de mesure (HB5) d'un temps variable ($T_{IEX}$) entre la fin du décompte du temps

fixe ($T_o$) et la détection de la i-ième oscillation.

**11.** Dispositif de mesure du temps de propagation ($T_p$) d'un signal ultrasonore selon la revendication 10, **caractérisé en ce que** les moyens de décompte d'un temps fixe ($T_o$) comprennent un compteur (HB1) et un décodeur (HB2).

**12.** Dispositif de mesure du temps de propagation ($T_p$) d'un signal ultrasonore selon l'une des revendications 10 à 11, **caractérisé en ce que** les moyens de détermination de la i-ième oscillation comportent un compteur (HB3) et un décodeur (HB4).

**13.** Dispositif de mesure du temps de propagation $T_p$ d'un signal ultrasonore selon l'une des revendications 10 à 12, **caractérisé en ce que** les moyens de mesure du temps variable ($T_{IEX}$) comportent un dispositif expanseur de temps (HB5).

**Patentansprüche**

**1.** Verfahren zur Messung der Propagationszeit bzw. Laufzeit ($T_p$) eines Ultraschallsignals zwischen zwei Transducern, die aus einem Sender und einem Empfänger, die voneinander beabstandet sind, gebildet sind, wobei der Sendetransducer einem Anregungssignal (IEn) unterworfen ist, das n aufeinanderfolgende Impulse einer Periode $T_e$ aufweist, wobei n von 1 verschieden ist, was das Senden einer Ultraschallwelle in Richtung des Empfängertransducers veranlasst, wobei die Ultraschallwelle im Ausgang des Empfängertransducers ein Empfangssignal erzeugt, wobei das Verfahren **dadurch gekennzeichnet ist, dass** es folgende Schritte umfasst:

- Beginnen einer Messung der intermediären Propagationszeit bzw. Laufzeit ($T_{int}$) ab dem Beginn der Anregung des Sendetransducers,

- Erkennung des Empfangssignals (SRn) im Ausgang des Empfangstransducers und Zählen der Schwingungen des Empfangssignals,

- Stoppen der Messung der intermediären Propagationszeit bzw. Laufzeit ($T_{int}$), wenn die i-te Schwingung (Pi) erkannt ist, wobei i von 1 verschieden ist, und

- Bestimmen der Propagationszeit bzw. Laufzeit (Tp) des Signals, indem die Differenz $T_{int}$-i x $T_e$ gebildet wird.

**2.** Verfahren nach Anspruch 1, **dadurch gekennzeichnet, dass** die Messung der intermediären Propagationszeit bzw. Laufzeit ($T_{int}$)

aufgrund der i-ten Schwingung (Pi) des Empfangssignals (SRn) gestoppt wird, das einer Amplitude des maximalen Empfangssignals entspricht.

3. Verfahren nach Anspruch 1 oder 2,
   **dadurch gekennzeichnet, dass** die Messung der intermediären Propagationszeit bzw. Laufzeit ($T_{int}$) gestoppt wird aufgrund der i-ten Schwingung (Pi) des Empfangssignals (SRn), derartig, dass i≠1.

4. Verfahren nach einem der vorstehenden Ansprüche,
   **dadurch gekennzeichnet, dass** die Messung der intermediären Propagationszeit bzw. Laufzeit ($T_{int}$) gestoppt wird aufgrund der i-ten Schwingung (Pi) des Empfangssignals (SRn), derartig, dass i=n.

5. Verfahren nach einem der vorstehenden Ansprüche,
   **dadurch gekennzeichnet, dass** die Messung der intermediären Propagationszeit bzw. Laufzeit ($T_{int}$) gestoppt wird aufgrund der i-ten Schwingung (Pi) des Empfangssignals (SRn), derartig, dass i=4.

6. Verfahren nach einem der Ansprüche 1 bis 4,
   **dadurch gekennzeichnet, dass** die Messung der intermediären Propagationszeit bzw. Laufzeit ($T_{int}$) gestoppt wird aufgrund der i-ten Schwingung (Pi) des Empfangssignals (SRn), derartig, dass i=5.

7. Verfahren nach einem der vorstehenden Ansprüche,
   **dadurch gekennzeichnet, dass** die Anzahl von Impulsen n, die das Anregungssignal (IEn) bilden, derartig ist, dass n≠1.

8. Verfahren nach einem der vorstehenden Ansprüche,
   **dadurch gekennzeichnet, dass** die Anzahl von Impulsen n, die das Anregungssignal (IEn) bilden, derartig ist, dass n=4.

9. Verfahren nach einem der Ansprüche 1 bis 7,
   **dadurch gekennzeichnet, dass** die Anzahl von Impulsen n, die das Anregungssignal (IEn) bilden, derartig ist, dass sie 5 beträgt.

10. Vorrichtung zur Messung der Propagationszeit bzw. Laufzeit (Tp) eines Ultraschallsignals, aufweisend:

    - Mittel zur Bildung eines Anregungssignals,
    - einen Sendetransducer (1; 2) der mit den Mitteln zur Bildung eines Anregungssignals verbunden ist,
    - einen Empfangstransducer (2; 1), der dazu bestimmt ist, das Ultraschallsignal in ein Empfangssignal umzuwandeln,
    - Vergleichsmittel, die mit dem Empfangstransducer verbunden sind, die dazu bestimmt sind, die Amplitude des Empfangssignals mit einer Auslöseschwellenspannung zu vergleichen und ein repräsentatives Signal der Schwingungen des Empfangssignals zu erzeugen,

wobei die Vorrichtung **dadurch gekennzeichnet ist, dass** sie außerdem aufweist:

- Mittel (HB1, HB2) zum Abziehen einer festen Zeit, die mit den Mitteln zur Bildung eines Anregungssignals verbunden sind, die dazu bestimmt sind, eine feste Zeit ($T_0$) ausgehend von dem Anregungsmoment des Sendetransducers abzuziehen,
- Mittel (HB3, HB4) zur Bestimmung der i-ten Schwingung, die mit den Vergleichsmitteln verbunden sind, die dazu bestimmt sind, die Anzahl der Schwingungen des Empfangssignals zu zählen und die i-te Schwingung zu erkennen, wobei i von 1 verschieden ist,
- Mittel (HB5) zur Messung einer variablen Zeit ($T_{IEX}$) zwischen dem Ende des Abzugs der festen Zeit ($T_0$) und der Erkennung der i-ten Schwingung.

11. Vorrichtung zur Messung der Propagationszeit bzw. Laufzeit (Tp) eines Ultraschallsignals nach Anspruch 10,
    **dadurch gekennzeichnet, dass** die Mittel zum Abziehen einer festen Zeit ($T_0$) einen Zähler (HB1) und einen Decodierer (HB2) aufweisen.

12. Vorrichtung zur Messung der Propagationszeit bzw. Laufzeit (Tp) eines Ultraschallsignals nach Anspruch 10 oder 11,
    **dadurch gekennzeichnet, dass** die Mittel zur Bestimmung der i-ten Schwingung einen Zähler (HB3) und einen Decodierer (HB4) aufweisen.

13. Vorrichtung zur Messung der Propagationszeit bzw. Laufzeit (Tp) eines Ultraschallsignals nach einem der Ansprüche 10 bis 12,
    **dadurch gekennzeichnet,**
    **dass** die Mittel zur Messung der variablen Zeit ($T_{IEX}$) eine Zeitexpansionsvorrichtung (HB5) aufweisen.

**Claims**

1. A method for measuring propagation time ($T_p$) of an ultrasonic signal between two transducers comprised of transmitter and a receiver at some distance from each other, the transmitting transducer being subjected to an excitation signal (IEn) comprising n successive pulses of period $T_e$ being equal to 1, resulting in the transmission of an ultrasonic wave in the direction of the receiving transducer, said ultrasonic wave generating at the output of the receiver transmitter a reception signal, said method being **characterized in that** it comprises the following steps :

- starting an intermediate propagation time measurement ($T_{int}$) at the output of the receiving transducer;
- detecting the reception signal (SRn) at the output of the receiving transducer and counting the oscillations of said reception signal ;
- stopping the intermediate propagation time measurement ($T_{int}$) when the i-i$^{th}$ oscillation (Pi) is detected, i being unequal to 1 and
- determining the propagation time ($T_p$) of the signal by forming the difference $T_{int} - i \times T_e$.

2. The method according to Claim 1, **characterized in that** the intermediate propagation time measurement ($T_{int}$) is stopped for the i$^{th}$ oscillation (Pi) of the reception signal (SRn) corresponding to an amplitude of maximum reception signal.

3. The method according to one of the above claims, **characterized in that** the intermediate propagation time measurement ($T_{int}$) is stopped for the i$^{th}$ oscillation (Pi) of the reception signal (SRn) such that $i \neq 1$.

4. The method according to one of the above claims, **characterized in that** the intermediate propagation time measurement ($T_{int}$) is stopped for the i$^{th}$ oscillation (Pi) of the reception signal (SRn) such that i = n.

5. The method according to one of the above claims, **characterized in that** the intermediate propagation time measurement ($T_{int}$) is stopped for the i$^{th}$ oscillation (Pi) of the reception signal (SRn) such that i = 4.

6. The method according to one of Claims 1 to 4, **characterized in that** the intermediate propagation time measurement ($T_{int}$) is stopped for the i$^{th}$ oscillation (Pi) of the reception signal (SRn) such that i = 5.

7. The method according to one of the above claims, **characterized in that** the number of pulses n comprising the excitation signal (IEn) is such that $n \neq 1$.

8. The method according to one of the above claims, **characterized in that** the number of pulses n comprising the excitation signal (IEn) is such that n = 4.

9. The method according to one of Claims 1 to 7, **characterized in that** the number of pulses n comprising the excitation signal (IEn) is 5.

10. A device for measuring propagation time ($T_p$) of an ultrasonic signal, comprising :

- the means for forming an excitation signal ;
- a transmitting transducer (1, 2) connected to said means for forming an excitation signal ;
- a receiving transducer (2, 1) for transforming the ultrasonic signal into a reception signal ;
- comparison means connected to said receiving transducer for comparing the amplitude of the reception signal to a triggering threshold voltage and generating a signal representative of the oscillations of said reception signal ;

said device comprising, in addition :

- the means for counting from a fixed time (HB1, HB2) connected to said means for forming an excitation signal for counting a fixed time ($T_0$) based on the instant of excitation of the transmitting transducer ;
- means for determining the i$^{th}$ oscillation (HB3, HB4) connected to said comparison means for counting the number of oscillations of the reception signal and detecting the i$^{th}$ oscillation, i not being equal to 1 ;
- means for measuring (HB5) a variable ($T_{IEX}$) between the end of counting of the fixed time ($T_0$) and detecting the i$^{th}$ oscillation.

11. The device for measuring propagation time ($T_p$) of an ultrasonic signal according to Claim 10, **characterized in that** the means for discounting of a fixed time ($T_0$) comprise a counter (HB1) and a decoder (HB2).

12. The device for measuring propagation time ($T_p$) of an ultrasonic signal according to one of Claims 10 to 11, **characterized in that** the means for determining the i$^{th}$ oscillation comprise a counter (HB3) and a decoder (HB4).

13. The device for measuring propagation time ($T_p$) of an ultrasonic signal according to one of Claims 10 to 12, **characterized in that** the means for measuring variable time ($T_{IEX}$) comprise a time expander device (HB5).

IE1

Tp

SR1

Fig. 1

PF1

SR1

Fig. 2

Fig. 3

Fig. 4

Fig. 5

Fig. 6a

Fig. 6b

Fig. 6c

Fig. 6d

EP 1 157 258 B1

Fig. 7